# EUROPÄISCHE PATENTSCHRIFT

(11) **EP 1 436 523 B1**
(45) Veröffentlichungstag und Bekanntmachung des Hinweises auf die Patenterteilung: **30.11.2005**
(21) Anmeldenummer: 02769878.6
(22) Anmeldetag: 21.08.2002
(51) Int. Cl.: F16F 9/53

(54) **MAGNETO-RHEOLOGISCHER DÄMPFER**
MAGNETO-RHEOLOGICAL DAMPER
AMORTISSEUR MAGNETO-RHEOLOGIQUE

(30) Priorität: 07.09.2001 DE 10143980
(43) Veröffentlichungstag der Anmeldung: 14.07.2004
(73) Patentinhaber: Bosch Rexroth AG, 97816 Lohr (DE)
(72) Erfinder: MANECKE, Peter, 97833 Frammersbach (DE); WINKLER, Bernd, A-4490 St. Florian (AT); MANHARTSGRUBER, Bernhard, A-4743 Peterskirchen (AT)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2002/003062
(87) Internationale Veröffentlichungsnummer: WO 2003/025418

(56) Entgegenhaltungen:
- WO-A-01/16503
- FR-A- 2 579 283
- GB-A- 1 282 568
- US-A- 5 241 991
- US-A- 5 452 745
- US-A- 5 984 385
- US-A- 6 095 486
- PATENT ABSTRACTS OF JAPAN vol. 012, no. 416 (M-759), 4. November 1988 (1988-11-04) & JP 63 152744 A (SHOWA ELECTRIC WIRE & CABLE CO LTD), 25. Juni 1988 (1988-06-25)

## Beschreibung

Die Erfindung betrifft einen magneto-rheologischen (MR) Dämpfer nach dem Patentanspruch 1.

MR-Dämpfer weisen eine magneto-rheologische Flüssigkeit auf, einen mit der Flüssigkeit beaufschlagten Arbeitsraum und ein Element zur Erzeugung eines Magnetfeldes. Dabei ist die Fließgrenze der Flüssigkeit über das Anlegen des Magnetfeldes veränderbar.

Ein Gehäuseinnenraum wird durch einen Kolben in einen Hub- und einen Zylinderraum getrennt, wobei über Öffnungen die Flüssigkeit zwischen den Räumen fließen kann. Prinzipiell sind MR-Dämpfer bekannt, die in dem Ventilmodus (Valve Mode), dem Scherungsmodus (Shear Mode) oder dem Quetschmodus (Squeeze Mode) arbeiten. Häufig erfolgt jedoch eine Vermischung der einzelnen Prinzipien, so daß eine genaue Einteilung nicht möglich ist

Ein MR-Dämpfer, der beispielsweise in dem Ventil- und dem Scherungsmodus arbeitet ist in der Druckschrift US 5,398,917 Fig. 3 offenbart. Die Öffnungen sind zwischen dem sich bewegenden Kolben und der Gehäuseinnenwand ausgebildet. Durch eine radial auf dem Kolben angeordnete elektrische Spule wird die Flüssigkeit in dem Spalt mit dem Magnetfeld beaufschlagt. Bei axialen Bewegungen des Kolbens fließt die Flüssigkeit durch die Öffnungen von dem Zylinderraum in den Hubraum bzw. umgekehrt. Aufgrund des Verhältnisses Öffnungsquerschnitt/Zylinder-(Hubraum) < 1 wird die Bewegung des Kolbens entsprechend gedämpft. Die Öffnung wirkt als Ventil, dessen Wirkung durch eine Veränderung der Viskositä-t erhöht bzw. verringert werden kann.

Des Weiteren schert sich die durch die Öffnungen strömende Flüssigkeit über den Öffnungsquerschnitt an der sich nicht bewegbaren Gehäuseinnenwand und dem sich bewegenden Kolben, so daß eine weitere Dämpfung erfolgt.

Nachteilig an dieser Lösung ist, daß die Spule auf dem Kolben gelagert ist, so daß eine Anpassung des MR-Dämpfers an die jeweiligen Aufgabenbedingungen (Dämpfungseigenschaften) durch ein einfaches und schnelles Auswechseln der Spule nicht möglich ist. Dadurch kann der MR-Dämpfer nicht optimal an unterschiedliche Dämpfungsbedingungen angepaßt werden.

Ein weiterer Nachteil der bekannten Lösung ist, daß weniger über die Viskosität der Flüssigkeit gedämpft wird, als vielmehr über den Querschnitt der Öffnungen in dem Kolben und die damit verbundene Drosselwirkung. D. h. die Fließ- und Kriecheigenschaften der magneto-rheologischen Flüssigkeit werden nicht optimal eingesetzt.

Ein anderer Nachteil an dieser Lösung ist, daß durch den Ventilmodus bei Belastung ein erheblicher Druckunterschied zwischen dem Hub- und dem Zylinderraum aufgebaut werden kann, wodurch sämtliche Bauteile des MR-Dämpfers, insbesondere Dichtungen, entsprechend angepaßt ausgeführt werden müssen.

Ein MR-Dämpfer, bei dem die Spule außerhalb des Gehäuseinnenraums angeordnet ist und der nicht in dem Ventilmodus arbeitet, ist in der US 5,492,312 offenbart. Der MR-Dämpfer arbeitet in dem Quetschmodus, wobei durch ein Anlegen eines Magnetfeldes mittels der Spule, die sich über die Gesamtlänge des MR-Dämpfers erstreckt, der gesamte Gehäuseinnenraum und somit die gesamte Flüssigkeit mit dem Magnetfeld beaufschlagt wird. Dabei kann die Flüssigkeit über einen Ringraum zwischen dem Kolben und der Gehäuseinnenwand zwischen dem Zylinder- und dem Hubraum fließen.

Nachteilig an dieser Lösung ist, daß der gesamte Gehäuseinnenraum dem Magnetfeld ausgesetzt ist, wodurch die Dämpfung weniger über ein Quetschen der Flüssigkeit in dem Hubraum bzw. durch den Ringraum, sondern mehr über ein Einklemmen des Kolbens in der Flüssigkeit erfolgt.

Aufgabe der vorliegenden Erfindung ist es, einen MR-Dämpfer zu schaffen, der die genannten Nachteile beseitigt und so ein wesentlich verbessertes Ansprechverhalten zeigt.

Diese Aufgabe wird durch die Merkmale des Patentanspruchs 1 gelöst.

Zur Lösung dieser Aufgabe wird ein MR-Dämpfer geschaffen, der vorzugsweise im Quetschmodus und im Scherungsmodus arbeitet. Der Ventilmodus ist deutlich reduziert. Die einzelnen axialen Öffnungen zwischen einem Zylinder und einem Kolben werden erfindungsgemäß durch einen Ringraum ersetzt, der schräg zur Kolbenachse ausgebildet ist. In Ausführungsbeispielen stellen ein Verdrängungsraum in Anschluß an den Ringraum und ein Kolbeninnenraum, der über Bohrungen mit dem Ringraum verbunden ist, den Zylinder (Kolbeninnenraum)- und den Hubraum (Verdrängungsraum) dar. Die ventilwirkung wird über einen entsprechend gewählten Durchmesser der Bohrungen zur lichten Weite des Ringraums reduziert. Zur, Erzeugung eines Magnetfelds in dem Ringraum ist radial außerhalb des Zylinders eine elektrische Spule befestigt.

Der wesentliche Vorteil der bevorzugten Anordnung der elektrischen Spulen außerhalb des Gehäuseinnenraums besteht darin, daß die elektrischen Spulen schnell und einfach ausgetauscht werden können, so daß eine entsprechende Anpassung des MR-Dämpfers an die Einsatzbedingungen erfolgen kann.

Sobald der Kolben in eine axiale Richtung bewegt wird, setzt die Flüssigkeit der Kolbenkraft eine Quetsch- und eine Scherkraft entgegen, wodurch der Kolben entsprechend gedämpft wird. Die Quetsch- und die Scherkraft richten sich unter anderem nach der Viskosität, dem Durchmesser der Bohrungen und der Schrägstellung des Ringraums zur Kolbenachse.

Ein bevorzugtes Ausführungsbeispiel sieht vor, den MR-Dämpfer spiegelsymmetrisch zu einer Querachse auszubilden, so daß sowohl in Zug- als auch in Druckrichtung eine Dämpfung erfolgen kann. Der Kolbeninnenraum ist über weitere Bohrungen mit einem zweiten Ringraum verbunden, der in einen zweiten Verdrängungsraum mündet. Der zweite Ringraum wird ebenfalls mit einem Magnetfeld von einer elektrischen Spule durchsetzt, wobei die Spulen wahlweise entgegengerichtete oder gleichgerichtete Magnetfelder erzeugen.

In diesem Fall ist der Kolbeninnenraum lediglich als Durchgangskanal für die Flüssigkeit in den zweiten Verdrängungsraum anzusehen. Entsprechend der axialen Bewegungsrichtung des Kolbens arbeitet somit entweder der erste Verdrängungsraum oder der zweite Verdrängungsraum als Hub- bzw. Zylinderraum.

Ein anderes bevorzugtes Ausführungsbeispiel sieht vor, den MR-Dämpfer mit Befüllungs- und Entlüftungsbohrungen zu versehen. Des Weiteren sind die Bohrungen zwischen den Ringräumen und dem Kolbeninnenraum näher an der Kolbenachse angeordnet, wodurch der Quetschmodus stärker hervorgehoben wird.

Ein besonderes Anwendungsgebiet des erfindunggemäßen MR-Dämpfers ist die Dämpfung von hohen Frequenzen, wie sie beispielsweise bei Gleisanlagen auftreten. Bei entsprechendem Einbau in das Gleisbett bzw. das Fundament lassen sich vor allem hohe Frequenzen verbessert unterdrücken.

Weitere vorteilhafte Ausführungsbeispiele sind Gegenstand der Unteransprüche.

Bevorzugte Ausführungsbeispiele sind in den nachfolgenden schematischen Darstellungen näher erläutert. Es zeigen:
Figur 1 einen Querschnitt eines erfindungsgemäßen magneto-rheologischen Dämpfers und
Figur 2 einen Querschnitt eines erfindungsgemäßen magneto-rheologischen Dämpfers mit Befüllungs- und Lüftungsbohrungen.

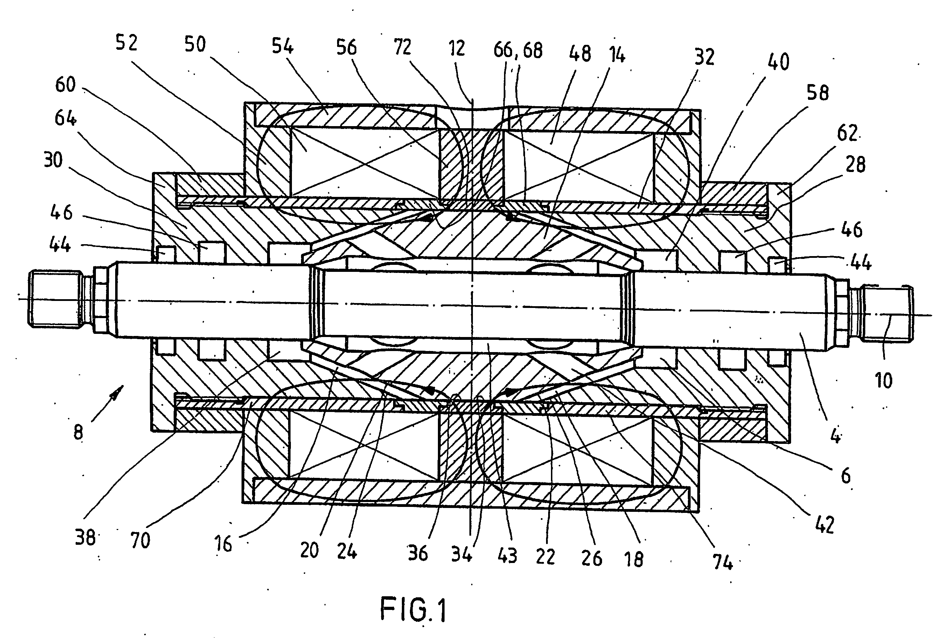

Figur 1 zeigt einen erfindungsgemäßen magneto-rheologischen (MR) Dämpfer 2 mit einem Kolben 4 auf einer nicht magnetisch leitfähigen Kolbenstange 5, der in einem mit einer magneto-rheologischen Flüssigkeit gefüllten Dämpferinnenraum 6 eines Zylinders 8 geführt ist. Der MR-Dämpfer 2 ist zu einer quer zur Längsachse 10 verlaufenden Querachse 12 spiegelsymmetrischen aufgebaut, wodurch ein Dämpfungshub in beide axiale Bewegungsrichtungen erzielt wird, so daß. Zug- und Druckkräfte gedämpft werden können.

Der Kolben 4, auch Anker genannt, bildet zwischen Kegelinnenflächen 20, 22 des Zylinders 8 und seinen entsprechend ausgebildeten Kegelaüßenflächen 24, 26 zwei schräg zur Kolbenachse 10 verlaufende Ringräume 16, 18. Durch die Schrägstellung der Ringräume 16, 18 wird im Vergleich zu axial ausgerichteten Ringräumen das Ringraumvolumen erhöht, wodurch entsprechend mehr Flüssigkeit zur Dämpfung des Kolbens 4 zur Verfügung steht. Die Kegelinnenflächen 20, 22 des Zylinders 8 werden durch zwei axial gegenüberliegend angeordnete Kolbengegenstücke 28, 30, auch Ankergegenstücke genannt, gebildet. Die Kolbengegenstücke 28, 30 sind in einem Polrohr 32 eingesetzt und derart beabstandet, daß in einem Bereich zwischen ihnen an den Innenumfangsflächen 34 des Zylinders 8 eine Führungsfläche 36 für den Kolben 4 in dem Zylinder 8 ausgebildet ist. Zwischen Führungsfläche 36 und dem Kolben 4 befindet sich ein Flüssigkeitsfilm. Dieser wird dabei im Schermodus beansprucht und übernimmt somit die Aufgabe des Schermodus, d. h., bei Anlegen eines Magnetfelds wird die Scherspannung (Viskosität) des Mediums (MR-Fluid) erhöht. Infolge der erhöhten Scherspannung wird der Bewegung des Kolbens (Ankers) ein erhöhter Bewegungswiderstand entgegengesetzt. Es gilt zu beachten, daß obwohl der Flüssigkeitsfilm von der magnetho-rheologischen, Flüssigkeit gebildet wird, keine Flüssigkeit entlang der Führungsfläche 36 zwischen den Ringräumen 16, 18 strömt.

Die Ringräume 16, 18 erstrecken sich zwischen den Kegelinnenflächen 20, 22 und den Kegelaußenflächen 24, 26 radial zwischen innenliegenden Verdrängungsräumen 38, 40 und der außenliegenden Innenumfangsfläche 34 des Polrohrs 32. Im mittleren Abschnitt der Ringräume 16, 18 sind im Kolben 4 Bohrungen 42, die in einem Kolbeninnenraum 43 münden, ausgebildet, so daß die Flüssigkeit je nach axialer Bewegung des Kolbens 4 zwischen den Verdrängungsräumen 38, 40 strömen kann. Das Strömen der Flüssigkeit durch den Kolbeninnenraum 43 ermöglicht ein Führen des Kolbens 4 entsprechend MR-Dämpfern nach dem Ventilmodus, bei denen im Gegensatz zu bekannten MR-Dämpfern nach dem Quetsch- und Scherungs die Gleitfläche nicht mit Durchgangskanälen versehen ist. Über Dichtungen 44, 46, beispielsweise Membrandichtungen, die radial um die Kolbenachse in den Kolbengegenstücken 28, 30 angeordnet sind, sind die Verdrängungsräume 16, 18 von der Umgebung getrennt.

Radial außerhalb des Dämpferinnenraums 6 sind um den Zylinder 8 zwei elektrische Spulen 48, 50 nebeneinander angeordnet. Die elektrischen Spulen 48, 50 umgreifen das Polrohr 32 und sind jeweils durch magnetisch leitfähige Segmente 52, 54, 56 ummantelt. Die axiale Sicherung der elektrischen Spulen 48, 50 erfolgt durch Distanzringe 58, 60 zwischen flanschförmigen Endabschnitten 62, 64 der Kolbengegenstcke 28, 30. Die elektrischen Spulen 48, 50 sind unabhängig voneinander ansteuerbar und durchsetzten im Besonderen die Ringräume 38, 40 mit jeweils einem Magnetfeld, wobei die Magnetfelder vorzugsweise entgegengerichtet sind. Dies hat den Vorteil, daß sich bei Ansteuerung beider Spulen 48, 50 der Kolben 4 in dem Zylinder 8 nach erfolgter Dämpfung selbsttätig in eine Ausgangslage zurückbewegt, wodurch eine externe Vorrichtung zum Zurückstellen des Kolbens wie zum Beispiel eine Feder nicht notwendig ist. Ein weiterer Vorteil dieser Anordung besteht darin, daß der erfindungsgemäße MR-Dämpfer als Differentrialdrosselwegaufnehmer eingesetzt werden kann, so daß parallel zur Dämpfung der Dämfpungshub messbar ist.

Zur Vermeidung von Überlagerungen beider Magnetfelder teilen zwei nicht magnetisch leitfähige Ringe 66, 68 das Polrohr 32 in drei magnetisch leitfähige Segmente 70, 72, 74. Die Anzahl der nicht magnetisch leitfähiger Ringe 66, 68 richtet sich nach der Anzahl elektrischer Spulen 48, 54.

Bei axialen Bewegungen des Kolbens 4 wird die Flüssigkeit sowohl in dem Verdrängungsraum 38, 40 als auch in dem Ringraum 16, 18 gequetscht, wobei im Mündungsbereich der Bohrungen 42 eine Scherung erfolgt. Dabei erfolgt die Dämpfung im wesentlichen über Quetschung in dem Ringraum 38, 40 oberhalb der Bohrungen 42, da vorrangig der Ringraum 38, 40 mit dem Magnetfeld beaufschlagt ist und die Flüssigkeit aus dem Verdrängungsraum 16, 18 über den Ringraum 38, 40 in die Bohrungen 42 und somit in den Kolbeninnenraum 43 bzw. den gegenüberliegenden Verdrängungsraum 16, 18 strömen kann.

Zur Unterstützung der Scherwirkung sind die Durchmesser der Bohrungen 42 so gewählt, daß sie größer als die lichte Weite des Ringraums 38, 40 sind. Dadurch stellen die Bohrungen 42 praktisch keine Drosselstelle für die Flüssigkeitsströmung dar, so daß sich kein Differenzdruck zwischen den Öffnungen der Bohrungen 42 aufbaut.

Entsprechend untergeordnet ist daher die Wirkung des Ventilmodus. Dieser läßt sich zwar durch eine Verkleinerung der Durchmesser der Bohrungen 42 im Verhältnis zur lichten Weite des Ringraums 38, 40 verstärken, jedoch führt diese Maßnahme zu einer Senkung der Scherungs- und der Quetschwirkung.

Ein Dämpferhub läßt sich prinzipiell über den Aufbau des MR-Dämpfers und die Viskosität der Flüssigkeit bestimmen (Fließgrenze proportional zum angelegten Magnetfeld). Der Aufbau des MR-Dämpfer kann zum Beispiel dahingehend geändert werden, daß zur Verstärkung des Ventilmodus das Verhältnis Durchmesser der Bohrungen 42/lichte Weite des Ringraums 16; 18 geändert wird oder daß zur weiteren Hervorhebung des Scherungs- und des Quetschmodus eine geänderte Schrägstellung des Ringraums zur Kolbenachse gewählt wird. Die Fließgrenze kann zum Beispiel über eine Ausdehnung des Magnetfeldes auf den Verdrängungsraum 38, 40 gesteigert werden.

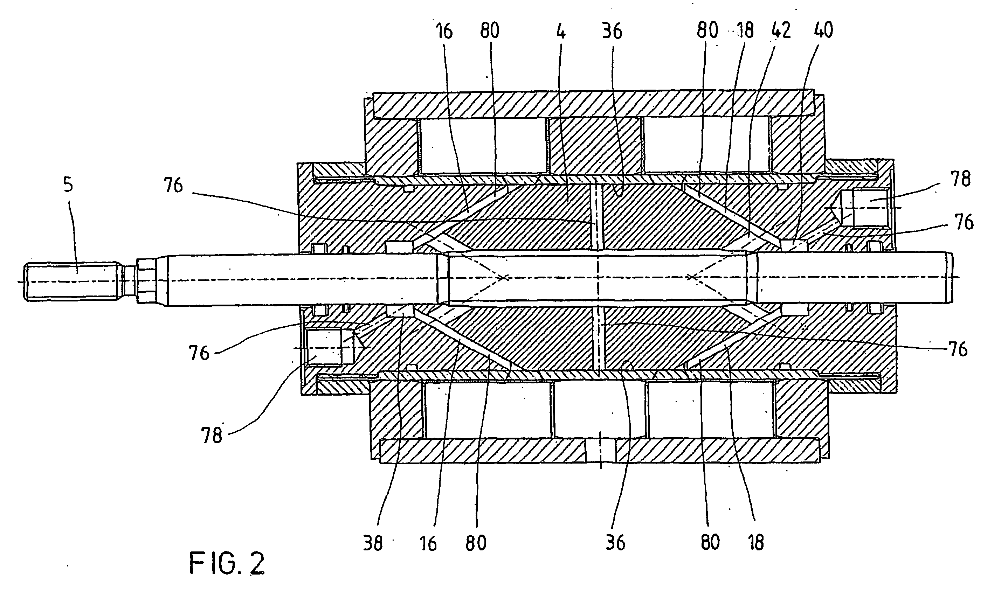

Figur 2 zeigt einen MR-Dämpfer mit Befüllungs- und Lüftungsbohrungen 76. Die Befüllungs- und Lüftungsbohrungen 76 erstrecken sich zum Einen in den Kolbengegenstücken 28, 30 etwa axial zwischen den Verdrängungsräumen 38, 40 und axial verlaufenden Ausnehmungen 78 in den flanschförmigen Endabschnitten 62, 64, und zum Anderen radial durch den Kolben 4 vom Kolbeninnenraum 43 in Richtung der Führungsfläche 36. Die Ausnehmungen 78 sind als Befüllungsöffnung ausgeführt und können über einen entsprechenden Verschluß, vorzugsweise Schraubverschluß, geöffnet bzw. geschlossen werden.

Bedingt durch die Anordnung der Befüllungs- und Lüftungsbohrungen 76 können sich bei gleichzeitige Öffnung der Befüllungsöffnungen bei einer Befüllung keine Lufteinschlüsse bilden bzw. bei einem Austausch der Flüssigkeit keine Restbestände der alten Flüssigkeit in dem MR-Dämpfer 2 sammeln.

Des Weiteren sind die Bohrungen 42 im Kolben 4 näher an der Kolbenstange 5 angeordnet. Dies hat den Vorteil, daß der Bereich 80 der Ringräume 16, 18, der sich oberhalb der Bohrungen 42 befindet, verlängert wird, wodurch die Quetschwirkung verstärkt wird.

Ein Ausführungsbeispiel sieht vor, daß die elektrische Spulen 48, 50 nicht außerhalb, sondern innerhalb des Dämpferinnenraums 6, z. B. radial auf dem Kolben 4, angeordnet sind.

Ein weiteres Ausführungsbeispiel sieht vor, notwendige magnetische Felder nicht über elektrische Spulen 48, 50, sondern über sonstige geeignete Elemente wie zum Beispiel Magnete zu erzeugen. Die Anzahl der Elemente richtet sich nach der aufzubringenden Dämpferkraft. Dabei ist es vorstellbar, daß nicht nur ein Ringraum 18, sondern andere Bereiche des Dämpferinnenraums 6 bzw. der gesamte Dämpferinnenraum 6 mit Magnetfeldern beaufschlagt wird.

Offenbart ist ein magneto-rheologischer (MR) Dämpfer mit einem Kolben, der in einem mit einer magneto-rheologischen Flüssigkeit gefüllten Zylinders geführt ist, wobei dessen Arbeitsraum einen schräg zur Kolbenachse zwischen dem Kolben und dem Zylinder ausgebildeten Ringraum umfasst.

### Bezugszeichenliste

- 2: MR-Dämpfer
- 4: Kolben (Anker)
- 5: Kolbenstange
- 6: Dämpferinnenraum
- 8: Zylinder
- 10: Längsachse
- 12: Querachse
- 16: Ringraum
- 18: Ringraum
- 20: Kegelinnenfläche
- 22: Kegelinnenfläche
- 24: Kegelaußenfläche
- 26: Kegelaußenfläche
- 28: Kolbengegenstück (Ankergegenstück)
- 30: Kolbengegenstück (Ankergegenstück)
- 32: Polrohr
- 34: Innenumfangsfläche
- 36: Führungsfläche
- 38: Verdrängungsraum
- 40: Verdrängungsraum
- 42: Bohrung
- 43: Kolbeninnenraum
- 44: Dichtung
- 46: Dichtung (Membran)
- 48: elektrische Spule
- 50: elektrische Spule
- 52: magnetisch leitfähiges Segment
- 54: magnetisch leitfähiges Segment
- 56: magnetisch leitfähiges Segment
- 58: Distanzring
- 60: Distanzring
- 62: flanschförmiger Endabschnitt
- 64: flanschförmiger Endabschnitt
- 66: nicht magnetisch leitfähiger Ring
- 68: nicht magnetisch leitfähiger Ring
- 70: magnetisch leitfähiges Segment
- 72: magnetisch leitfähiges Segment
- 74: magnetisch leitfähiges Segment
- 76: Befüllungs- und Entlüftungsbohrung
- 78: Ausnehmung (Befüllungsöffnung)
- 80: oberer Bereich

## Patentansprüche

1. Magneto-Rheologischer (MR) Dämpfer (2) mit einem Kolben (4), der in einem mit einer magneto-rheologischen Flüssigkeit gefüllten Dämpferinnenraum (6) eines Zylinders (8) geführt ist, deren rheologische Eigenschaften durch Anlage eines Magnetsfelds veränderbar ist, wobei die Flüssigkeit bei einer Bewegung des Kolbens (4) aus einem Arbeitsraum in einen Aufnahmeraum gedrückt wird, wobei der Arbeitsraum einen schräg zur Kolbenachse verlaufenden Ringraum (16, 18) zwischen Kolben (4) und Zylinder (8) umfasst, **dadurch gekennzeichnet, daß** der Aufnahmeraum von einem Kolbeninnenraum (43) gebildet ist, der über zumindest eine Bohrung (42) mit dem Ringraum (16, 18) verbunden ist.

2. MR-Dämpfer nach Anspruch 1, **dadurch gekennzeichnet, daß** der Kolben (4) mit seiner Außenumfangfläche den Ringraum (16, 18) begrenzt und mit seiner Kolbenstange (5) den Kolbeninnenraum (43).

3. MR-Dämpfer nach den Ansprüchen 1 und 2, **dadurch gekennzeichnet, daß** die Bohrung (42) im mittleren Bereich des Ringraums (16,18) im Kolben (4) angeordnet ist, wobei der. Bohrungsdurchmesser so gewählt ist, daß die lichte Weite des Ringraums (16, 18) wesentlich kleiner ist.

4. MR-Dämpfer nach den Ansprüchen 1 und 2, **dadurch gekennzeichnet, daß** der Ringraum (16, 18) durch Kegelinnenflächen (20, 22) des Zylinders (8) und entsprechend ausgebildeter Kegelaußenflächen (24, 26) des Kolbens (4) gebildet ist.

5. MR-Dämpfer nach Anspruch 4, **dadurch gekennzeichnet, daß** die Kegelinnenfläche (20, 22) durch ein Kolbengegenstück (28, 30) gebildet sind, das in einem Polrohr (32) eingesetzt ist, dessen Innenumfangsfläche (34) den Ringraum (16, 18) im Bereich zwischen den im Abstand zueinander stehenden Kolbengegenstücken (28, 30) begrenzt.

6. MR-Dämpfer nach einem der vorhergehenden Ansprüche, **dadurch gekennzeichnet, daß** in Anschluß an den Ringraum (16, 18) ein Verdrängungsraum (38, 40) gebildet ist.

7. MR-Dämpfer nach einem der vorhergehenden Ansprüche, **dadurch gekennzeichnet, daß** der MR-Dämpfer (2) symmetrisch zu einer quer zur Längsachse (10) verlaufenden Querachse (12) aufgebaut ist.

8. MR-Dämpfer nach dem Anspruch 2 **dadurch gekennzeichnet, daß** die magneto-rheologische Flüssigkeit durch den Kolbeninnenraum (43) zwischen Verdrängungsräumen (38, 40) strömt.

9. MR-Dämpfer nach einem der vorhergehenden Ansprüche, **dadurch gekennzeichnet, daß** der Dämpferinnenraum (6) axial über Dichtungen (44, 46), vorzugsweise Membrandichtungen, von der Umgebung getrennt ist.

10. MR-Dämpfer nach den Anspruch 5, **dadurch gekennzeichnet, daß** sich das Polrohr (32) vorzugsweise durch zwei nicht magnetisch leitfähige Ringe (66, 68) in drei magnetisch leitfähige Segmente (70, 72, 74) teilt.

11. MR-Dämpfer nach einem der vorhergehenden Ansprüche, **dadurch gekennzeichnet, daß** zur Erzeugung eines magnetischen Felds in den Ringräumen (16, 18) magnetische Felder erzeugende Elemente, insbesondere zwei elektrische Spulen (48, 50) außerhalb der Ringräume (16, 18) aufgebracht sind.

12. MR-Dämpfer nach Anspruch 11, **dadurch gekennzeichnet, daß** die Anzahl und die Elemente untereinander variierbar ist/sind.

13. MR-Dämpfer nach einem der vorhergehenden Ansprüche, **dadurch gekennzeichnet, daß** der MR-Dämpfer (2) Befüllungs- und Entlüftungsbohrungen (76) aufweist, wobei einige Befüllungs- und Entlüftungsbohrungen (76) in Befüllungsöffnungen (78) münden, die vorzugsweise mit einem Schraubverschluß schließbar und öffnungsbar sind.

14. MR-Dämpfer nach Anspruch 13, **dadurch gekennzeichnet, daß** sich die Befüllungs- und Entlüftungsbohrungen (76) etwa axial durch die Kolbengegenstücke (28, 30) von den Befüllungsöffnungen (78) zu den Verdrängungsräumen (16, 18) erstrecken, und radial durch den Kolben (4) vom Kolbeninnenraum (43) in Richtung Führungsfläche (36).

## Claims

1. Magneto-rheological (MR) damper (2) including a piston (4) guided in a damper cavity (6) of a cylinder (8) that is filled with a magneto-rheological fluid, the rheological properties of which may be modified by application of a magnetic field, wherein concurrently with a movement of the piston (4) the fluid is pushed from a work volume into a reception space, wherein the work volume includes an annular space (16, 18) extending obliquely relative to the piston axis between piston (4) and cylinder (8), **characterized in that** the reception space is formed by a piston cavity (43) which communicates with the annular space (16, 18) through at least one bore (42) through its outer peripheral surface defines the annular space (16, 18) and through its piston rod (5) the piston cavity (43).

2. MR damper in accordance with claim 1, **characterized in that** the piston (4) through its outer peripheral surface defines the annular space (16, 18) and through its piston rod (5) the piston cavity (43).

3. MR damper in accordance with claims 1 and 2, **characterized in that** the bore (42) is arranged in the center range of the annular space (16, 18) in the piston (4), the bore diameter being selected such that the inner width of the annular space (16, 18) is substantially smaller.

4. MR damper in accordance with claims 1 and 2, **characterized in that** the annular space (16, 18) is formed by inner cone surfaces (20, 22) of the cylinder (8) and correspondingly formed outer cone surfaces (24, 26) of the piston (4).

5. MR damper in accordance with claim 4, **characterized in that** the inner cone surfaces (20, 22) are formed by a piston counterpart (28, 30) inserted into a pole tube (32), the inner peripheral surface (34) of which defines the annular space (16, 18) in the range between the piston counterparts (28, 30) placed at a distance from each other.

6. MR damper in accordance with any one of the preceding claims, **characterized in that** in continuation of the annular space (16, 18) a displacement volume (38, 40) is formed.

7. MR damper in accordance with any one of the preceding claims, **characterized in that** the MR damper (2) is designed to be symmetrical relative to a transverse axis (12) extending transversely to the longitudinal axis (10).

8. MR damper in accordance with claim 2, **characterized in that** the magneto-rheological fluid flows through the piston cavity (43) between displacement volumes (38, 40).

9. MR damper in accordance with any one of the preceding claims, **characterized in that** the damper cavity (6) is axially separated from the environment by seals (44, 46), preferably membrane seals.

10. MR damper in accordance with claim 5, **characterized in that** the pole tube (32) is preferably divided by two magnetically non-conductive rings (66, 68) into three magnetically conductive segments (70, 72, 74).

11. MR damper in accordance with any one of the preceding claims, **characterized in that** for generating a magnetic field in the annular spaces (16, 18), elements generating magnetic fields, in particular two electrical coils (48, 50) are applied externally of the annular spaces (16, 18).

12. MR damper in accordance with claim 11, **characterized in that** the number and element(s) are variable among each other.

13. MR damper in accordance with any one of the preceding claims, **characterized in that** the MR damper (2) includes filling and bleeding bores (76), with some filling and bleeding bores (76) opening into filling openings (78) preferably adapted to be opened and closed with the aid of a screw plug.

14. MR damper in accordance with claim 13, **characterized in that** the filling and bleeding bores (76) extend approximately axially through the piston counterparts (28, 30) from the filling openings (78) to the displacement volumes (16, 18), and radially through the piston (4) from the piston cavity (43) in the direction of the guide surface (36).

## Revendications

1. Amortisseur magnéto-rhéologique (MR) (2) avec un piston (4) qui est guidé dans un espace intérieur d'amortisseur (6) rempli d'un liquide magnéto-rhéologique d'un cylindre (8), dont les propriétés rhéologiques peuvent être modifiées par l'application d'un champ magnétique, le liquide étant mis sous pression par le déplacement du piston (4) d'un espace de travail à un espace de réception, dans lequel l'espace de travail comprend un espace annulaire (16, 18) s'étendant en diagonale par rapport à l'axe du piston entre le piston (4) et le cylindre (8), **caractérisé en ce que** l'espace de réception est formé par un espace intérieur de piston (43) qui est relié par au moins un orifice (42) avec l'espace annulaire (16, 18).

2. Amortisseur MR selon la revendication 1, **caractérisé en ce que** le piston (4) délimite, avec sa surface périphérique extérieure, l'espace annulaire (16, 18) et, avec sa tige de piston (5), l'espace intérieur du piston (43).

3. Amortisseur MR selon les revendications 1 et 2, **caractérisé en ce que** l'orifice (42) est placé dans la région centrale de l'espace annulaire (16, 18) dans le piston (4), le diamètre de l'orifice étant choisi de sorte que le diamètre intérieur de l'espace annulaire (16, 18) est notablement plus petit.

4. Amortisseur MR selon les revendications 1 et 2, **caractérisé en ce que** l'espace annulaire (16, 18) est formé par les surfaces intérieures coniques (20, 22) du cylindre (8) et les surfaces extérieures coniques (24, 26) formées en conséquence du piston (4).

5. Amortisseur MR selon la revendication 4, **caractérisé en ce que** les surfaces intérieures coniques (20, 22) sont formées par une paroi de piston (28, 30) qui est insérée dans un tube polaire (32) dont la surface périphérique intérieure (34) délimite l'espace annulaire (16, 18) dans la région entre les parois de piston (28, 30) espacées l'une de l'autre.

6. Amortisseur MR selon une des revendications précédentes, **caractérisé en ce qu'**un espace de refoulement (38, 40) est raccordé à l'espace annulaire (16, 18).

7. Amortisseur MR selon une des revendications précédentes, **caractérisé en ce que** l'amortisseur MR (2) est construit symétriquement par rapport à un axe transversal (12) s'étendant perpendiculairement à l'axe longitudinal (10).

8. Amortisseur MR selon la revendication 2, **caractérisé en ce que** le liquide magnéto-rhéologique circule à travers l'espace intérieur du piston (43) entre les espaces de refoulement (38, 40).

9. Amortisseur MR selon une des revendications précédentes, **caractérisé en ce que** l'espace intérieur de l'amortisseur (6) est isolé axialement de l'environnement par des joints (44, 46), de préférence des joints à membrane.

10. Amortisseur MR selon la revendication 5, **caractérisé en ce que** le tube polaire (32) est divisé de préférence par deux anneaux non magnéto-conducteurs (66, 68) en trois segments magnéto-conducteurs (70, 72, 74).

11. Amortisseur MR selon une des revendications précédentes, **caractérisé en ce que**, pour générer un champ magnétique dans les espaces annulaires (16, 18), des éléments générant des champs magnétiques, en particulier deux bobines électriques (48, 50), sont montés à l'extérieur des espaces annulaires (16, 18).

12. Amortisseur MR selon la revendication 11, **caractérisé en ce que** le nombre et les éléments est/sont variable(s).

13. Amortisseur MR selon une des revendications précédentes, **caractérisé en ce que** l'amortisseur MR (2) possède des orifices de remplissage et d'aération (76), certains orifices de remplissage et d'aération (76) débouchant dans des ouvertures de remplissage (78) qui peuvent de préférence être ouvertes et fermées avec un bouchon à vis.

14. Amortisseur MR selon la revendication 13, **caractérisé en ce que** les orifices de remplissage et d'aération (76) s'étendent sensiblement axialement à travers les parois de piston (28, 30) à partir des ouvertures de remplissage (78) jusqu'aux espaces de refoulement (16, 18), et radialement à travers le piston (4) à partir de l'espace intérieur du piston (43) en direction d'une surface de guidage (36).
